# EUROPEAN PATENT APPLICATION

(11) **EP 3 128 747 A1**
(43) Date of publication of application: **08.02.2017**
(21) Application number: 15774071.3
(22) Date of filing: 01.04.2015
(51) Int. Cl.: H04N 7/18, B60R 1/00, B60R 11/02, G06T 1/00

(54) **REAR-VIEW VERIFICATION DEVICE, AND AUTOMOBILE EQUIPPED WITH SAME**

(30) Priority: 03.04.2014 JP 2014076722; 04.04.2014 JP 2014077493
(71) Applicant: Panasonic Intellectual Property Management Co., Ltd., Osaka-shi, Osaka 570-6207 (JP)
(72) Inventor: OKOHIRA, Takashi, 1-61, Shiromi 2-chome Chuo-ku Osaka-shi, Osaka 540-6207 (JP); NAKAI, Jun, 1-61, Shiromi 2-chome Chuo-ku Osaka-shi, Osaka 540-6207 (JP)
(74) Representative: Grünecker Patent- und Rechtsanwälte PartG mbB
(86) International application number: PCT/JP2015/001880
(87) International publication number: WO 2015/151523

(57) **Abstract**

A rear-view verification apparatus includes a display apparatus and a camera apparatus. The display apparatus includes a display device, a first controller, a first transmitter, and a first receiver. The first controller causes the display device to display an image in accordance with an image signal fed from the camera apparatus. The camera apparatus includes a second receiver, a second transmitter, a second controller, and an imaging element. The first controller transmits a synchronization signal to the second controller via the first transmitter and the second receiver. The second controller transmits the image signal to the first controller via the second transmitter and the first receiver. The first controller transmits the image signal to the display device.

## Description

### TECHNICAL FIELD

The present invention relates to a rear-view verification apparatus, which is also called "a rearview mirror" for vehicles, for example, and a vehicle equipped with the apparatus.

### BACKGROUND ART

A rear-view verification apparatus, also called "a rearview mirror" for a vehicle, has been proposed which is capable of displaying a rearview-image that is shot with a camera apparatus, for example.

That is, the rear-view verification apparatus includes: a display apparatus mounted in front of the driver's seat of the vehicle interior of the vehicle; and a camera apparatus which is connected to the display apparatus and capable of shooting a rearview-image in a rearward direction of the vehicle. The apparatus causes the display apparatus to display the rearview-image that is shot with the camera apparatus. (Patent Literature 1 indicated below is a prior art document relating to the technology similar to this.)

### Citation List

### Patent Literature

PTL 1: Japanese Patent Unexamined Publication No. 2013-244752

### SUMMARY OF THE INVENTION

The present invention provides a rear-view verification apparatus that features ease of use.

The rear-view verification apparatus according to the present invention includes a display apparatus and a camera apparatus. The display apparatus is mounted in front of a driver's seat inside a vehicle interior of a vehicle. The camera apparatus is coupled with the display apparatus, and capable of shooting a rearview-image in a rearward direction of the vehicle. The display apparatus includes: a display device, a first controller, a first transmitter, and a first receiver. The first controller is coupled with the display device, and causes the display device to display the image in accordance with an image signal fed from the camera apparatus. The first transmitter and the first receiver are coupled with the first controller. The camera apparatus includes: a second receiver, a second transmitter, a second controller, and an imaging element. The second receiver is coupled with the first transmitter, and the second transmitter is coupled with the first receiver. The second controller is coupled with the second receiver, the second transmitter, and the imaging element. The first controller transmits a synchronization signal to the second controller via the first transmitter and the second receiver. The second controller transmits the image signal to the first controller via the second transmitter and the first receiver. The first controller transmits the image signal to the display device.

With this configuration, there is no need for generating a one-frame screen on the display apparatus side. As a result, there is few time lag of the displayed image behind the real image, resulting in a less strange feeling for a driver.

### BRIEF DESCRIPTION OF DRAWINGS

FIG. 1 is an elevational view of the vehicle interior of a vehicle that is equipped with a rear-view verification apparatus according to an embodiment of the present invention.
FIG. 2 is a plan view of the vehicle shown in FIG. 1.
FIG. 3 is a schematic side view of the vehicle interior of the vehicle shown in FIG. 2.
FIG. 4 is an elevational view of a display apparatus of the rear-view verification apparatus shown in FIG. 1.
FIG. 5 is a control block diagram of the rear-view verification apparatus according to the embodiment of the present invention.
FIG. 6 is an operation flowchart of the rear-view verification apparatus shown in FIG. 5.
FIG. 7 is a timing flowchart of the rear-view verification apparatus shown in FIG. 5.

### DESCRIPTION OF EMBODIMENTS

Prior to describing embodiments of the present invention, a problem of the conventional rear-view verification apparatus will be briefly described. In the rear-view verification apparatus disclosed in Patent Literature 1, an image signal shot with a camera apparatus is sequentially stored in a memory of a display apparatus to generate a one frame screen. After that, the one frame screen is displayed on the display apparatus. For this reason, the image displayed on the display apparatus has a time lag behind the real image.

When a vehicle concerned is traveling at a low speed, such a time-lag situation does not matter in reality. However, when the vehicle is traveling at a mid-speed or higher, the time lag of the image leads to a strange feeling that something is wrong, resulting in bad ease of use.

Hereinafter, examples in which a rear-view verification apparatus according to the embodiment of the present invention is mounted in a vehicle will be described with reference to the drawings.

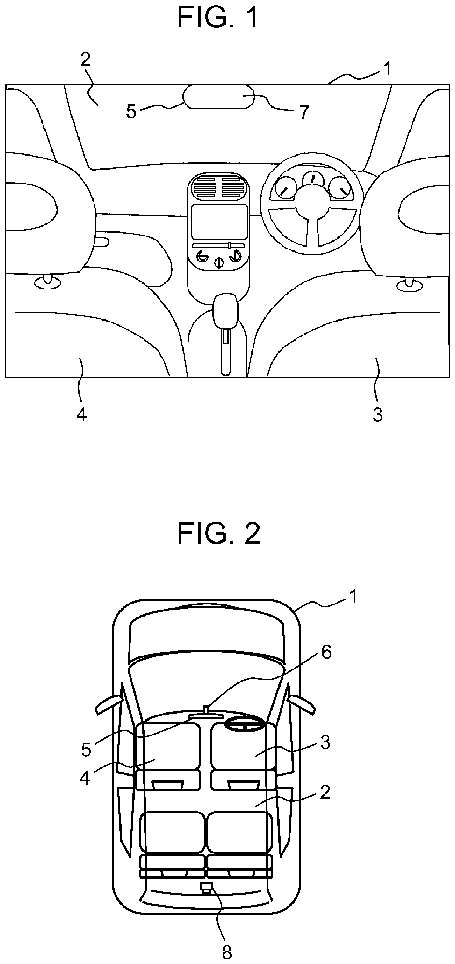

In FIGS. 1 to 3, in a front and upper area of a portion between driver's seat 3 and passenger seat 4 in vehicle interior 2 of vehicle 1, display apparatus 5 configuring the rear-view verification apparatus is mounted to mounting part 6, movably and adjustably (in terms of its tilting state).

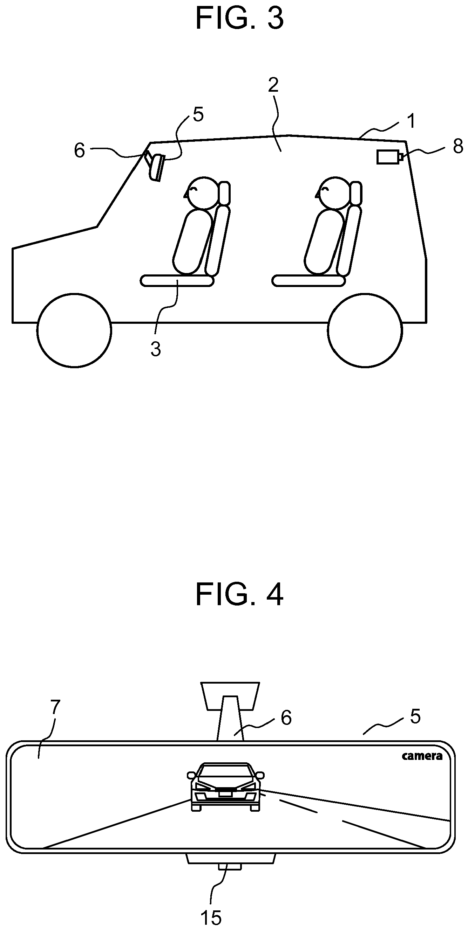

Display apparatus 5 is of a container shape having an opening on the driver's seat 3 side. In this opening, display device 7 is mounted as shown in FIG. 4.

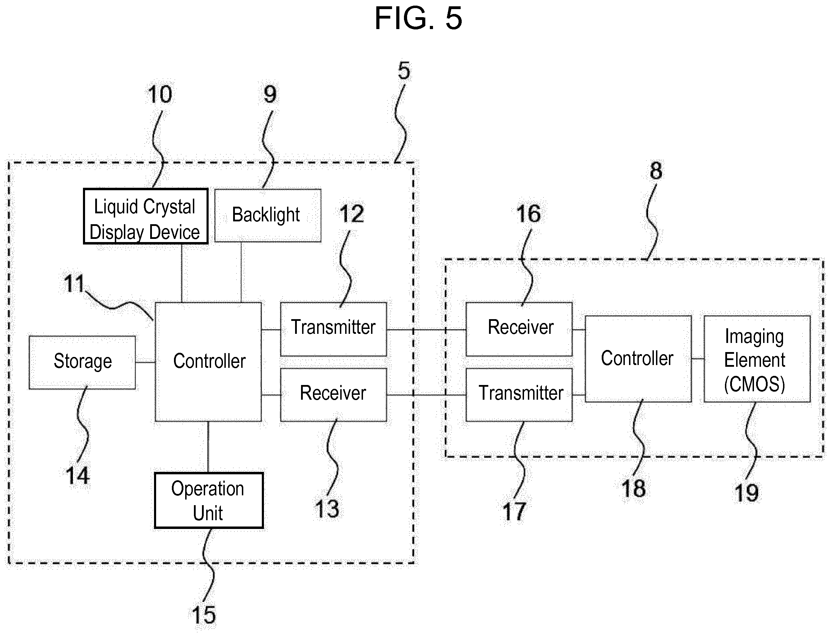

Display device 7 has a configuration, as shown in FIG. 5, for displaying an image shot with camera apparatus 8 that is capable of shooting a rearview-image in the rearward direction of vehicle 1.

That is, as shown in FIG. 5, display apparatus 5 includes: backlight 9 disposed in the inside of the apparatus; liquid crystal display device 10 disposed on the driver's seat 3 side of backlight 9; controller 11 coupled with backlight 9 and liquid crystal display device 10; transmitter 12; receiver 13; storage 14; and operation unit 15. Transmitter 12, receiver 13, storage 14, and operation unit 15 are coupled with controller 11. Controller 11, transmitter 12, receiver 13, and liquid crystal display device 10 correspond to a first controller, a first transmitter, a first receiver, and a display device, respectively.

Note that storage 14 stores an operation program, and operation unit 15 is used to turn a power switch between ON and OFF.

On the other hand, as shown in FIG. 5, camera apparatus 8 includes: receiver 16 to be coupled with transmitter 12 of display apparatus 5; transmitter 17 to be coupled with receiver 13 of display apparatus 5; controller 18 coupled with receiver 16 and transmitter 17; and imaging element 19 coupled with controller 18. Controller 18, transmitter 17, and receiver 16 correspond to a second controller, a second transmitter, and a second receiver, respectively.

That is, in the embodiment, controller 11 of display apparatus 5 transmits a synchronization signal to controller 18 of camera apparatus 8 via transmitter 12 and receiver 16, although details will be described later. Moreover, upon receiving the synchronization signal, controller 18 of camera apparatus 8 transmits an image signal to controller 11 of display apparatus 5 via transmitter 17 and receiver 13.

Then, in this state, controller 11 of display apparatus 5 is configured to sequentially transmit the image signals to liquid crystal display device 10 where the image signals are displayed thereon. That is, controller 11 causes liquid crystal display device 10 to display the image in accordance with the image signal fed from camera apparatus 8.

Note that, in the embodiment, imaging element 19 includes a complementary metal-oxide semiconductor (CMOS) sensor.

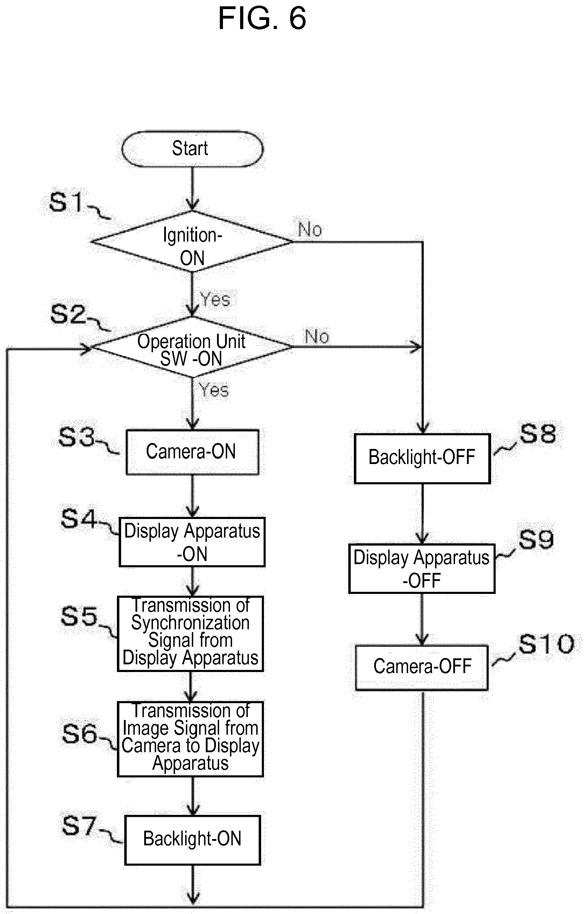

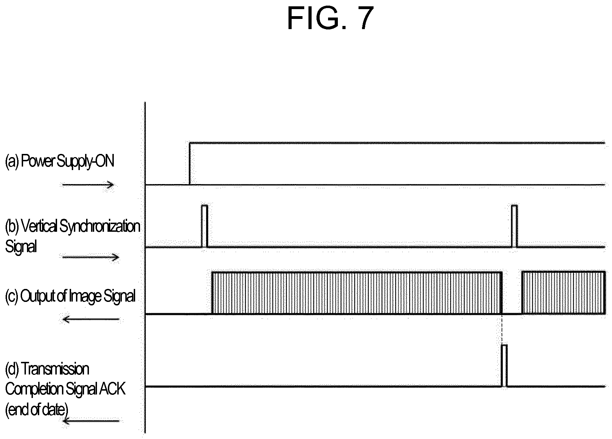

With the configuration described above, in the ON state of an ignition switch (not shown) of vehicle 1 (S1 of FIG. 6), the power switch is turned ON through an operation of operation unit 15 shown in FIG. 4 ("Yes" in S2 of FIG. 6), which allows power supply to camera apparatus 8 and display apparatus 5, resulting in an activated state thereof (S3 and S4 of FIG. 6, and (a) of FIG. 7).

The embodiment is characterized in that, when camera apparatus 8 and display apparatus 5 becomes in the activated state in this way, controller 11 of display apparatus 5 transmits a synchronization signal (vertical synchronization signal) to controller 18 of camera apparatus 8 via transmitter 12 and receiver 16, as shown in (b) of FIG. 7 (S5 of FIG. 6).

Moreover, upon receiving the synchronization signal fed from controller 11 of display apparatus 5, controller 18 of camera apparatus 8 transmits the image signal to controller 11 of display apparatus 5 via transmitter 17 and receiver 13, as shown in (c) of FIG. 7 (S6 of FIG. 6).

Upon receiving the image signal fed from controller 18 of camera apparatus 8, controller 11 of display apparatus 5 causes backlight 9 to be in the ON state and then sequentially supplies the image signals to liquid crystal display device 10 of display apparatus 5, thereby causing the display device to display the image signals thereon (S7 of FIG. 6).

Moreover, at the end of one frame of the image signal generated by camera apparatus 8, controller 18 of camera apparatus 8 transmits a transmission completion signal for one frame of the image to controller 11 of display apparatus 5 via transmitter 17 and receiver 13, as shown in (d) of FIG. 7.

Then, controller 11 of display apparatus 5 transmits the next synchronization signal to controller 18 of camera apparatus 8 via transmitter 12 and receiver 16. From then on, the operations of FIGS. 6 and 7 are repeated.

That is, the configuration according to the embodiment is as follows: Controller 11 of display apparatus 5 transmits the synchronization signal to controller 18 of camera apparatus 8 via transmitter 12 and receiver 16. Controller 18 of camera apparatus 8 transmits the image signal to controller 11 of display apparatus 5 via transmitter 17 and receiver 13. Controller 11 transmits the image signal to liquid crystal display device 10.

For this reason, there is no need for generating a one-frame screen on the display apparatus 5 side. As a result, there is few time lag between the displayed image and the real image, resulting in a less strange feeling for a driver with good ease of use.

Note that, since imaging element 19 used in the embodiment is a CMOS sensor with as many as 330000 pixels, it is also possible to use only a central part of the sensing area of the sensor. That is, the reduction of the number of the pixels being used allows a further reduction of the time lag of the displayed image behind the real image.

Note that, when the power switch is turned OFF through an operation of operation unit 15 shown in FIG. 4 ("No" in S2 of FIG. 6), backlight 9 is turned OFF (S8 of FIG. 6). In addition, the power supply to display apparatus 5 and camera apparatus 8 is shut down, causing the both to be in the OFF state (S9 and S10 of FIG. 6).

### INDUSTRIAL APPLICABILITY

As described above, according to the present invention, the first controller of the display apparatus transmits a synchronization signal to the second controller of the camera apparatus via the first transmitter and the second receiver. The second controller of the camera apparatus transmits an image signal to the first controller of the display apparatus via the second transmitter and the first receiver. The first controller transmits the image signal to the display device. With this configuration, there is no need for generating a one-frame screen on the display apparatus side. As a result, there is few time lag of the displayed image behind the real image, resulting in a less strange feeling for a driver. For this reason, the rear-view verification apparatus according to the present invention features ease of use.

Therefore, the technology according to the present invention is expected to be applied to rear-view verification apparatuses and to vehicles equipped with the apparatuses.

### REFERENCE MARKS IN THE DRAWINGS

- 1: vehicle
- 2: vehicle interior
- 3: driver's seat
- 4: passenger seat
- 5: display apparatus
- 6: mounting part
- 7: display device
- 8: camera apparatus
- 9: backlight
- 10: liquid crystal display device
- 11: controller
- 12: transmitter
- 13: receiver
- 14: storage
- 15: operation unit
- 16: receiver
- 17: transmitter
- 18: controller
- 19: imaging element

## Claims

1. A rear-view verification apparatus comprising:
a display apparatus disposed in front of a driver's seat inside a vehicle interior of a vehicle; and
a camera apparatus coupled with the display apparatus and capable of shooting a rearview-image in a rearward direction of the vehicle,
wherein the display apparatus includes:
a display device;
a first controller coupled with the display device, and configured to cause the display device to display an image in accordance with an image signal transmitted from the camera apparatus;
a first transmitter coupled with the first controller; and
a first receiver coupled with the first controller; and
the camera apparatus includes:
a second receiver coupled with the first transmitter;
a second transmitter coupled with the first receiver;
a second controller coupled with the second receiver and the second transmitter; and
an imaging element coupled with the second controller,
wherein the first controller transmits a synchronization signal to the second controller via the first transmitter and the second receiver,
the second controller transmits the image signal to the first controller via the second transmitter and the first receiver, and
the first controller transmits the image signal to the display device.

2. The rear-view verification apparatus according to claim 1,
wherein the second controller transmits a transmission completion signal for one frame of the image to the first controller via the second transmitter and the first receiver, and
the first controller transmits a next synchronization signal to the second controller via the first transmitter and the second receiver.

3. The rear-view verification apparatus according to any one of claims 1 and 2, wherein the imaging element is a complementary metal-oxide semiconductor sensor.

4. A vehicle comprising:
a vehicle interior; and
the rear-view verification apparatus according to any one of claims 1 to 3,
wherein the camera apparatus of the rear-view verification apparatus is disposed in one of an inside of the vehicle interior and a rear part of an outside of the vehicle interior.
